# EUROPEAN PATENT APPLICATION

(11) **EP 2 042 793 A1**
(43) Date of publication of application: **01.04.2009**
(21) Application number: 07116849.6
(22) Date of filing: 20.09.2007
(51) Int. Cl.: F16L 1/028, F16L 11/12, F17C 7/02, F17C 7/04

(54) **Underground transport of fluids such as hydrocarbons**

(71) Applicant: Pipelife Nederland B.V., 1601 MA Enkhuizen (NL)
(72) Inventor: Cloos, Peter Jeroen, 1602 HZ Enkhuizen (NL); Dalmolen, Lambertus Gerrit Peter, 1019 SE Amsterdam (NL)
(74) Representative: van Westenbrugge, Andries

(57) **Abstract**

A plastic pipe (1) for transporting fluids, like hydrocarbons, said pipe having a pipe wall with a specific permeability with respect to said fluids and said pipe wall having an outer surface, is surrounded by an envelope (2). Said envelope (2) has an inner surface (6) and is impermeable with respect to said fluids, or has a permeability which is at least an order of magnitude less than the permeability of the pipe wall. Between the envelope (2) inner surface (6) and the pipe wall outer surface (5) a space (3) is defined for collecting fluids which have permeated through the pipe wall (4).

## Description

The invention is related to the field of underground transport of fluids, in particular of hydrocarbons. Usually, such fluids are transported through steel pipes. The steel material of the pipe has been selected with the purpose of withstanding the pressures of both the fluids which are being transported, as well as the pressure exerted by the ground material on the pipe. The intended service life of such pipelines is considerable, which means that the integrity thereof should be maintained during prolonged periods of time. In practice it appears however that the internal surface of the pipe can be attacked by aggressive components of e.g. hydrocarbons.

The problem associated with for instance chemical attack is that the thickness of the pipe wall can be reduced to such a degree that the integrity of the pipe can no longer be guaranteed. Eventually, pores my be formed in the pipe wall as well as larger sized holes. This formation of holes is of course very undesirable in view of the pollution which is caused thereby in the ground material.

In an attempt to prevent the occurrence of chemical attack, plastic pipes have been proposed and used for transport of fluids such as hydrocarbons, Plastic material can be selected to have an adequate resistance against chemical attack. Moreover, fibre reinforced plastic pipes can have an appreciable strength end stiffness, which means that such plastic pipes can be designed for relatively high loads and internal pressures.

Nevertheless, fibre reinforced plastic pipes also have a disadvantage in that they are permeable with respect to specific components of the fluids. Such components may thus migrate through the ground, and in the end form a plume of pollutions. At some point in time, a polluted ground area may have to be cleaned for environmental reasons, which is a costly and cumbersome job. It is thus highly desirable to provide a plastic pipe which does not exhibit permeation phenomena, or which is highly impermeable.

According to CH-A-674763, a plastic pipe having a permeation barrier is proposed. Said pipe has an aluminium layer which is fixed to and which surrounds the pipe. Furthermore, cushion layers are provided between the pipe and the aluminium layer, as well as around the aluminium layer. These cushion layers and the purpose of protecting the aluminium layer against mechanical loads exerted when the pipe exhibits deformations. Although the aluminium layer provides the desired degree of impermeability, the disadvantage thereof is that said prior art pipe has a specific lay out which cannot easily be applied to pipes of other types. For instance, it is highly desirable to apply fibre reinforced plastic pipes with a high permeability; thus, it would be necessary to manufacture many different kinds of pipes which all have to be held in stock.

The object of the invention is therefore to provide the possibility to provide a solution to the problem of providing a plastic pipe, for instance a fibre-reinforced plastic pipe, with protection against permeation of fluids without however having to manufacture special, dedicated types of pipe. This object is achieved by, in combination, a plastic pipe for transporting fluids, like hydrocarbons, said pipe having a pipe wall with a specific permeability with respect to said fluids and said pipe wall having an outer surface, and an envelope surrounding the pipe, said envelope having an inner surface and being impermeable with respect to said fluids or having a permeability which is at least an order of magnitude less than the permeability of the pipe wall, wherein between the envelope inner surface and the pipe wall outer surface a space is defined for collecting fluids which have permeated through the pipe wall.

According to the invention, an existing, prior art pipe design can be made safe with respect to permeability phenomena by completely accomodating the pipe, in circumferential direction, in the envelope. Thereby, a traditional pipe, although not fully impermeable with respect to the fluids being transported, can be applied in the ground without danger of pollution. Any fluids, such as gasses or liquids, which would migrate through the pipe wall, are contained within the envelope. Thus, also a fibre reinforced pipe can be used and applied safely without risk of pollution. It is not necessary to adapt the pipe itself; instead, the envelope which has been applied afterwards and which surrounds the pipe prevents such fluids from entering the surrounding soil.

The envelope can extend over considerable lengths of the pipe. In particular, several of such envelopes may be arranged behind each other along the length of the pipe, and sealed with respect to each other. In this connection, the ends of the envelope which are opposite in the axial direction may be sealed with respect to the pipe.

The impermeability of the envelope may be ascertained by a metal layer. Preferably, the envelope comprises at least a plastic layer which is laminated on the metal layer. More preferably, both sides of the metal layer are laminated with a plastic layer. One or two of such plastic layers form a protection for the aluminium layer. Said layer is preferably a foil, which itself is relatively vulnerable to tearing. Furthermore, the plastic layers offer the possibility to seal the envelope by melting the plastic.

In this connection, the envelope may also comprise at least a reinforcement layer, such as a textile fabric, for instance a polyester fabric. The textile fabric further enhances the mechanical strength of the envelope. A high mechanical strength of the envelope is desirable from the point of view of maintaining the integrity of said envelope while exposing it to the rough circumstances which prevail during the process of laying and of burying the combination of pipe and envelope. In particular, the reinforcement layer can be tear resistant; also resistance against piercing is highly desirable.

As mentioned before, any fluids which permeate through the pipe wall are collected in the space between the envelope and the pipe. Thus, pollution of the surrounding soil is prevented. It may be desirable to remove such fluids from said space, and to that end the space may be connected to a discharge for permeated fluids, e. g. a flow line which is buried in the ground and which surfaces at a proper location. Additionally, the discharge may comprise a reservoir for collecting and/or treating the permeated gasses.

In this connection, it is of importance that the space remains free to such an extent that the fluids can travel all along the pipe. That is to say, even under the pressure exerted on the envelope by the surrounding soil, said space should be free or an interrupted in the longitudinal direction of the pipe. Although usually the overdimension of the envelope with respect to the plastic pipe will ascertain a free, be it somewhat wrinkled, space, the existence of an interrupted space can be enhanced by applying a longitudinal element therein. One or both of the cross-sectional dimensions of such longitudinal element can be at least an order of magnitude smaller than the cross-sectional dimensions of the pipe. The longitudinal element can have a flexible character, and can be a rope or wire. In a preferred embodiment, the longitudinal element is of a permeable nature with respect to the permeated fluids, e.g. in the form of a wick.

The invention is furthermore related to an underground transport system for fluids like hydrocarbons, comprising a ground area consisting of bottom material such as earth, rock and the like, and the combination as described before, wherein the pipe having a pipe wall with a specific permeability with respect to said fluids, and an envelope surrounding the pipe, said envelope being impermeable with respect to said fluids or having a permeability which is at least an order of magnitude less than the permeability of the pipe wall, a space being defined between the envelope and the pipe wall for collecting fluids which have permeated through the pipe wall, wherein the ground area comprises a trench, the pipe and envelope together being accomodated in the trench and the trench being filled with a filling material, said filling material bearing against the envelope.

The space between the pipe and the envelope is also maintained in the buried condition, with the earth pressure acting on the envelope. A loose fit of the envelope around the pipe generally makes that the space is not fully compressed under earth pressures, but maintains its ability to accommodate permeated fluids and possibly to provide a passage therefore.

The invention is also related to a method for obtaining the underground transport system as described before, comprising the steps of:
- providing a ground area,
- forming a trench on the ground area,
- providing a plastic pipe having a pipe wall with a specific permeability with respect to the fluids.
- providing a sheet material or a laminate having a permeability with respect to said fluids which is at least an order of magnitude smaller than the permeability of the pipe wall,
- applying the sheet material loosely around the pipe,
- forming an envelope,
- filling the trench with ground material while the plastic pipe and surrounding envelope in the trench in such a way that the ground material bears onto the envelope.

This method can be carried out in different ways. According to a first possibility, the envelope is provided around the plastic pipe while said plastic pipe is outside the trench. After the envelope has thus been applied around the plastic pipe, the combination of the plastic pipe and envelope are laid down in the trench and subsequently covered with soil. This way of action is beneficial in case for instance the trench is partly or wholly filled with water, such as groundwater.

According to a second possibility, in a first that the sheet material laminate is laid down in the trench. Next, the pipe is laid down in the claims and onto the sheet material laminate. Finally, the envelope is formed around the plastic pipe, which activities are carried out in the trench.

The way in which the envelope is formed around the plastic pipe is to some extent dependent on the type of sheet material. As mentioned before, said sheet material preferably as at least one outer layer which is weldable by means of heat. In this connection, the method according to the invention preferably comprises the steps of:
- making the heat sealable layer of the sheet material (12) face the plastic pipe (1),
- making the heat sealable layer parts which are located at the opposite longitudinal areas of the formed sheet material (12) face each other,
- heat sealing said heat sealable layer parts onto each other.

The step of heat sealing the sheet material can be carried out by means of conventional heat sealing apparatus, which will not further be described. Furthermore, it is to be noted that according to this method, the outer layer of the envelope need not be of a heat sealable material. In fact, the outer layer of the envelope preferably encompasses the reinforcement layer, which provides the necessary strength of the envelope against external attack.

Also, the invention is related to an envelope for use with the combination as described before. In this envelope, the vulnerable metal foil is preferably laminated between at least two plastic layers. These plastic layers are in a way, which is known per se, adhered to the metal foil by means binder layers such as glue layers or bonding layers. Preferably, the inner layer of the envelope is a heat sealable plastic layer, and the outer layer of the envelope is a reinforcement layer.

The invention is also related to a sheet for manufacturing such envelope. Said sheet as well preferably comprises a metal layer laminated between at least two plastic layers. One of the outer layers of the sheet preferably is a heat sealable plastic layer, and the other layer preferably is the reinforcement layer.

The invention will not be described further with reference to an embodiment of the invention shown in the figures.
Figure 1 shows a view in perspective and cross-section of the combination of the pipe and an envelope according to the invention.
Figure 2 shows a cross-section through an underground transport system provided with the pipe and envelope according to figure 1.
Figure 3 shows an enlarged detail according to III of figure 2.
Figure 4 shows an enlarged detail according to IV of figure 2.
Figure 5 shows a view in perspective of the laminate, longitudinal element and plastic pipe in a first stage of obtaining the combination.
Figure 6 shows an enlarged cross-section through the combination of a plastic pipe and an envelope thus obtained.

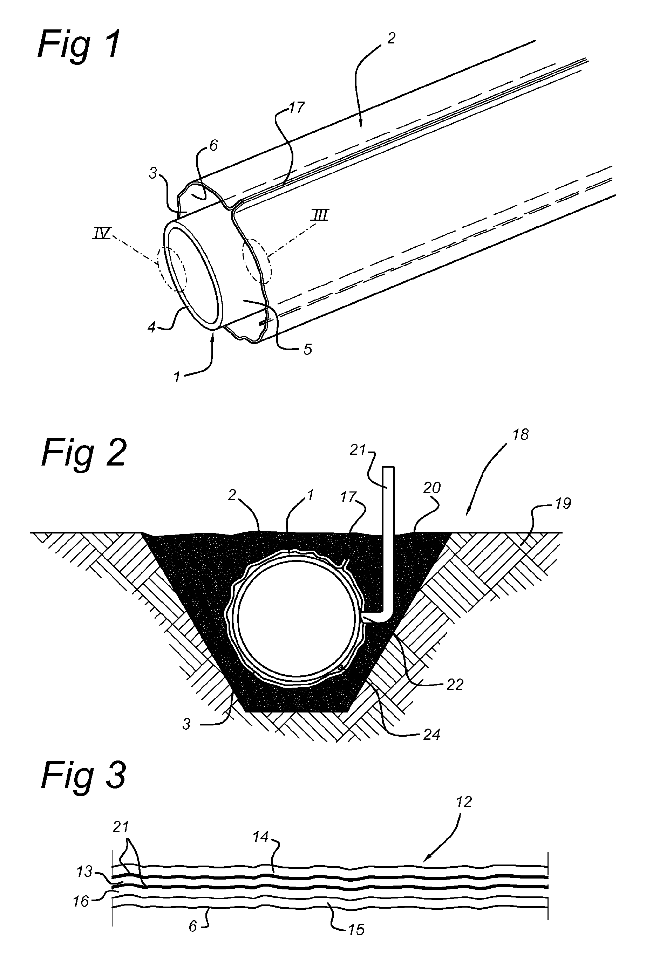

Figure 1 shows a plastic pipe 1, which has been fully accommodated within the envelope 2. Said envelope 2 has been fitted loosely around said pipe 1 with a certain amount of play. Thus, a space 3 is formed between the pipe 1 and the envelope 2. In fact, the pipe 1 has a pipe wall 4 with an outer surface 5, and the envelope has an inner surface 6, the space 3 being delimited by said pipe wall outer surface 5 and the envelope inner surface 6.

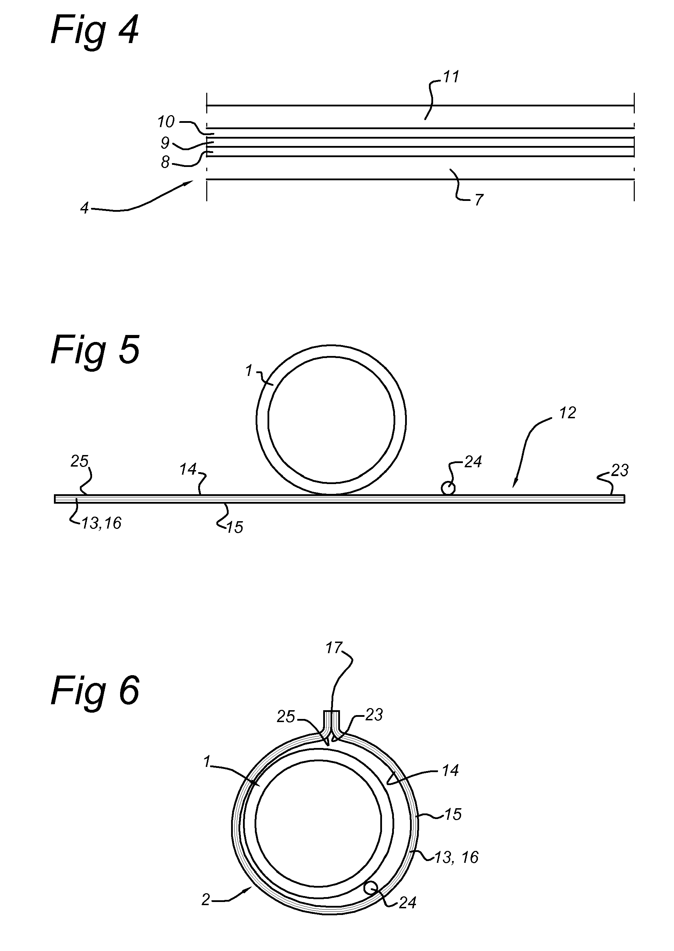

The pipe 1 in question can be used for the transport of fluids such as hydrocarbons. In this connection, the pipe 1 is carried out as a fibre-reinforced plastic pipe, the wall 4 of which contains several layers as shown in figure 4. The wall 4 comprises, seen from the inside to the outside of the pipe 1, a plastic liner 7, several layers of fibres 8, 9, 10, and a coating 11. Such a fibre-reinforced plastic pipe is strong and stiff enough to resist the high temperature and pressures which may prevail when transporting hydrocarbons. On the other hand, the plastic material of the pipe 1 has a certain permeability with respect to specific components of fluids like hydrocarbons.

For the purpose of preventing such components to spread into the area surrounding the plastic pipe 1, the envelope 2 has been provided around the plastic pipe 1. Said envelope 2 should be impermeable, or at least almost impermeable, with respect to specific components of for instance hydrocarbon fluids. To that end, the envelope 2 comprises the laminate 12 as shown in figure 3. Said laminate 12 consists of an aluminium foil 13, which is coated on both sides with a plastic layer 14, 16. Said plastic layers 14,16 and laminated onto the aluminium foil 13 by means of bonding layers 21 which are known per se. Onto one of the plastic layers 16, a textile fabric 15, for instance a polyester fabric, has been applied. The plastic layer 14 defines the inner surface 6 of the envelope 2.

Furthermore, the longitudinal element 24, such as the wire or rope, is contained in the space 3 defined between the plastic pipe 1 and the envelope 2. The purpose of this longitudinal element 24 will be discussed with reference to figure 2.

As shown in figure 1, the laminate 12 has been formed into the envelope 2 by means of the weld 17 by means of which these plastic layer 14 has been welded onto itself. At the location of the weld 17, the plastic layer 14 has been connected to each other by applying heat and by melting. Furthermore, the layer of textile fabric 15 provides the laminate 12 with the required strength against tearing etc.

The process of applying the laminate 12 around the plastic pipe 1 has been highlighted in the figures 5 and 6. Figure 5 shows a first step, in which the laminate 12 has been laid out, and the pipe 1 has been positioned on top of the laminates 12. The heat sealable plastic layer 14 is facing the plastic pipe 1, while the reinforcement layer 15 is facing away from the plastic pipe 1. Also, the longitudinal element 24 addressed before is in laid down on the laminates 12.

Next, the sheet material or laminate 12 is folded or curved around the plastic pipe 1 in such a way that the longitudinal edge areas 22, 23 thereof are brought towards to each other. Subsequently, the portions of the sealable plastic layer 14 which are located at said longitudinal edge areas 22, 23 are fused to each other under the influence of heat and pressure, whereby the seal 17 as shown in figure 6 is obtained.

The combination of the plastic pipe 1 and the envelope 2 as shown in figure 1, is applied in the ground area 18 as shown in figure 2. Said ground area has been provided with a trench 19 beforehand. Subsequently, the combination of the plastic pipe 1 together with the envelope 2 are laid in the trench 19, and surrounded and covered with a filling material 20 such as rock , stones, etc. Thus, the envelope 2 is pressed onto the outer surface 5 of the plastic pipe 1, whereby however the space 3 is left open to a certain extent as a result of the over dimensioned shape of the envelope 2. The free or uninterrupted character of the space 3 in the longitudinal direction of the plastic pipe 1, is ascertained or promoted by the rope or wire 24. This rope or wire 24 is pressed onto the outer wall of the pipe 1, together with the envelope 2. The presence of this rope or wire 24 however ensures that always an uninterrupted path is present along such rope or wire. The longitudinal transport of fluids can be promoted further in case the rope or wire 24, or any other type of longitudinal element, is permeable with respect to said fluids, e.g. is carried out as a wick. Although a single rope or wire has been shown, it is of course possible to apply several thereof. Also, the cross-sectional shape can be varied, so as to include flat and wide longitudinal elements.

Thus, in the case of transporting fluids like hydrocarbons through the plastic pipe 1, any fluids which escape through the wall of the plastic pipe 1 as a result of the partial pressure differences which occur over the plastic pipe wall 4, and the permeability of the plastic material thereof, are held captive with in the envelope 2. Said envelope 2 is impermeable or a largely impermeable with respect to such a fluids as a result of the presence of the aluminium foil 13.

In case it is necessary to remove the fluids from the space 3 between the plastic pipe 1 and the envelope 2, a flow line 21 can be connected to the space 3 through a hole 22 in the envelope 2. Subsequently, the flow line 21 can be connected to a collecting vessel, etc.

## Claims

1. In combination, a plastic pipe (1) for transporting fluids, like hydrocarbons, said pipe (1) having a pipe wall (4) with a specific permeability with respect to said fluids and said pipe wall (4) having an outer surface (5), and an envelope (2) surrounding the pipe (1), said envelope (2) having an inner surface (6) and being impermeable with respect to said fluids or having a permeability which is at least an order of magnitude less than the permeability of the pipe wall (4), wherein between the envelope inner surface (6) and the pipe wall outer surface (5) a space (3) is defined for collecting fluids which have permeated through the pipe wall (4).

2. Combination according to claim 1, wherein the envelope (2) fully surrounds the plastic pipe (1) in circumferential direction.

3. Combination according to claim 1 or 2, wherein the envelope (2) has ends which are opposite in the axial direction and which are sealed with respect to the pipe (1).

4. Combination according to any of the preceding claims, wherein the envelope (2) comprises at least a metal layer (13).

5. Combination according to claim 4, wherein the envelope comprises at least a plastic layer (14,16) which is laminated on the metal layer (13).

6. Combination according to claim 5, wherein both sides of the metal layer (13) are laminated with at least a plastic layer (14,16).

7. Combination according to any of the preceding claims, wherein the envelope (2) comprises at least a reinforcement layer (15), such as a textile fabric.

8. Combination according to claim 7, wherein the reinforcement layer (15) is tear resistant and/or resistant against piercing.

9. Combination according to claim 7 or 8, wherein the reinforcement layer (15) comprises a polyester fabric.

10. Combination according to any of the preceding claims, wherein the space (3) is connected to a discharge (21) for permeated fluids.

11. Combination according to claim 10, wherein the discharge (21) comprises a reservoir for collecting and/or treating the permeated gasses.

12. Combination according to any of the preceding claims, wherein the space (3) is a free space.

13. Combination according to any of the preceding claims, wherein the space (3) is uninterrupted in the longitudinal direction of the plastic pipe (1).

14. Combination according to any of the preceding claims, wherein a longitudinal element (24) is contained within the space (3), the cross sectional dimensions of which longitudinal element (24) are at least an order of magnitude smaller than the cross sectional dimensions of the plastic pipe (1).

15. Combination according to claim 14, wherein the longitudinal element (24) has a flexible character, such as a rope or wire.

16. Combination according to claim 14 or 15, wherein the longitudinal element (24) is of a permeable nature with respect to the permeated fluids.

17. Combination according to claim 16, wherein the longitudinal element is (24) a wick.

18. Underground transport system for fluids like hydrocarbons, comprising a ground area (18) consisting of bottom material such as earth, rock and the like, and the combination according to any of the preceding claims, wherein the pipe (1) has a pipe wall (4) with a specific permeability with respect to said fluids, and an envelope (2) surrounding the pipe (1), said envelope (2) being impermeable with respect to said fluids or having a permeability which is at least an order of magnitude less than the permeability of the pipe wall (4), a space (3) being defined between the envelope (2) and the pipe wall (4) for collecting fluids which have permeated through the pipe wall, wherein the ground area (18) comprises a trench (19), the pipe (1) and envelope (2) together being accomodated in the trench (19) and the trench being filled with a filling material (20), said filling material (20) bearing against the envelope (2).

19. System according to claim 18, wherein the space (3) is connected to a flow line (21) for discharging permeated fluids from the space (3) between the plastic pipe (1) and the envelope (2).

20. System according to claim 19, wherein the flow line (21) is at least partly buried in the bottom material (20) of the ground area (18).

21. Method for obtaining the underground transport system according to any of claims 18-20, comprising the steps of:
- providing a ground area (18),
- forming a trench (19) in the ground area (18),
- providing a plastic pipe (1) having a pipe wall (4) with a specific permeability with respect to the fluids.
- providing a sheet material or laminate (12) having a permeability with respect to said fluids which is at least an order of magnitude smaller than the permeability of the pipe wall (4),
- applying the sheet material (12) loosely around the plastic pipe (1),
- forming an envelope (2),
- filling the trench (19) with ground material (20) while the plastic pipe (1) and surrounding envelope (2) are in the trench (19) in such a way that the ground material bears onto the envelope (2).

22. Method according to claim 21, comprising the steps of:
- providing the envelope (2) around the plastic pipe (1) while said plastic pipe (1) is outside the trench (19),
- positioning the plastic pipe (1) with surrounding envelope (2) in the trench (19).

23. Method according to claim 21, comprising the steps of:
- positioning the sheet material laminate (12) in the trench (19),
- positing the plastic pipe (1) in the trench (19),
- forming the envelope (2) while the plastic pipe (1) is in the trench (19).

24. Method according to claim 22 or 23, comprising the steps of:
- forming the sheet material (12) around the plastic pipe (1),
- bringing the opposite longitudinal edge areas of the formed sheet material (12) together,
- sealing said opposite longitudinal edge areas with respect to each other so as to form the envelope (2).

25. Method according to claim 24, wherein the sheet material comprises a heat sealable outer layer, comprising the steps of:
- making the heat sealable layer of the sheet material (12) face the plastic pipe (1),
- making the heat sealable layer parts which are located at the opposite longitudinal areas of the formed sheet material (12) face each other,
- heat sealing said heat sealable layer parts onto each other.

26. Method according to any of claims 23-25, comprising the steps of:
- connecting the space (3) between the envelope (2) and the plastic pipe (1) to a flow line (21),
- discharging fluids which have collected in the space (3) through the flow line (21).

27. Sheet material or a laminate (12) for use in the method according to any of claims 21-26, comprising at least a metal foil (13) and a plastic layer (14, 16) which are adhered to each other.

28. Sheet material according to claim 27, wherein the metal foil (13) is laminated between at least two plastic layers (14, 16).

29. Sheet material according to claims 27 or 28, wherein a reinforcement layer (15) is provided.

30. Sheet material according to claim 29, wherein the reinforcement layer (15) is an outer layer, the opposite outer layer (14) comprising a heat sealable material.
